# EUROPEAN PATENT SPECIFICATION

(11) **EP 3 163 855 B1**
(45) Date of publication and mention of the grant of the patent: **22.07.2020**
(21) Application number: 16195760.0
(22) Date of filing: 26.10.2016
(51) Int. Cl.: H04W 4/16, H04W 4/80, H04M 3/42, H04M 1/725, H04W 4/00, H04M 1/56

(54) **METHOD AND DEVICE FOR MAKING CALL**
VERFAHREN UND VORRICHTUNG ZUR TÄTIGUNG EINES ANRUFS
PROCÉDÉ ET DISPOSITIF D'ÉTABLISSEMENT D'APPEL

(30) Priority: 29.10.2015 CN 201510719022
(43) Date of publication of application: 03.05.2017
(73) Proprietor: Xiaomi Inc., Beijing 100085 (CN)
(72) Inventor: LI, Yueting, Beijing 100085 (CN); XING, Xinyan, Beijing 100085 (CN); YONG, Xing, Beijing 100085 (CN)
(74) Representative: Cabinet Beau de Loménie

(56) References cited:
- EP-A1- 1 672 895
- EP-A1- 2 068 541
- CN-A- 104 703 148

## Description

### TECHNICAL FIELD

The present disclosure relates to the field of mobile communication, and more particularly, to a method and a device for making a call.

### BACKGROUND

With the development of science and technology, it is common to answer a call by using a terminal device (such as a mobile phone) in work and life of people. But sometimes, people may be inconvenient to answer the call for a variety of reasons, wherein a typical scenario is in a car, a ringtone may distract a driver and result in danger, and traffic accidents often happen when answering a call during driving.

Document EP 1 672 895 A1 discloses a telephone communication system in which the occurrence of the situation of talking on the phone by using a hands-free device is prevented or reduced in talking by using a cellular phone.

Document EP 2 068 541 A1 discloses a telecommunication presence system with indication that the subscriber is driving a motor vehicle.

### SUMMARY

In order to solve the problem in related arts, the present disclosure provides a method and a device for making a call, to avoid the interference caused by the call to the driver.

According to a first aspect of embodiments of the present disclosure, there is provided a method for making a call, applied in a first terminal according to claim 1.

Optionally, the determining whether the user of the first terminal is driving includes:
detecting through a short distance wireless transmission device whether a vehicle-mounted system exists, the short distance wireless transmission device being installed in the first terminal, or being installed in a wearable device connected to the first terminal; and
if it is detected that the a vehicle-mounted system exists, determining that the user of the first terminal is driving.

According to a second aspect of embodiments of the present disclosure, there is provided a method for making a call, applied in a second terminal according to claim 3.

Optionally, the preset operation includes:
generating a prompt indicating that the user of the first terminal is driving; and
after triggering the preset operation, the method further comprises:
   querying a current state of the user of the first terminal from the server and generating a prompt if the current state queried from the server is a non-driving state.

According to a third aspect of embodiments of the present disclosure, there is provided a method for making a call, applied in a server according to claim 5.

According to a fourth aspect of embodiments of the present disclosure, there is provided a device for making a call, applied in a first terminal according to claim 6.

Optionally, the short distance wireless transmission device is installed in the first terminal, or is installed in a wearable device connected to the first terminal.

According to a fifth aspect of embodiments of the present disclosure, there is provided a device for making a call, applied in a second terminal according to claim 8.

Optionally, the device further includes:
a call prompt module configured to generate a prompt if the current state queried from the server is a non-driving state.

According to a sixth aspect of embodiments of the present disclosure, there is provided a device for making a call, applied in a server according to claim 10.

According to further aspects of embodiments of the present disclosure, there is provided a computer program and recording medium according to claims 11-14.

According to an example of the present disclosure, there is provided a device for making a call, including:
a processor; and
a memory for storing instructions executable by the processor;
wherein the processor is configured to:
   determine whether a user of the first terminal is driving;
   if the user of the first terminal is driving, send a first message to a server, such that a current state of the user of the first terminal is set to a driving state by the server according to the first message; and
   if the user of the first terminal is not driving, send a second message to the server, such that the current state is set to a non-driving state by the server according to the second message.

According to an example of the present disclosure, there is provided a device for making a call, including:
a processor; and
a memory for storing instructions executable by the processor;
wherein the processor is configured to:
   when calling a first terminal, query a current state of a user of the first terminal from a server, wherein the current state is opened to specified users, and a user of the second terminal belongs to the specified users;
   determine whether the current state is a driving state; and
   if the current state is the driving state, trigger a preset operation.

According to an example of the present disclosure, there is provided a device for making a call, including:
a processor; and
a memory for storing instructions executable by the processor;
wherein the processor is configured to:
   receive a first message or a second message sent by a first terminal;
   set a current state of a user of the first terminal to a driving state according to the first message, or set the current state to a non-driving state according to the second message, wherein the current state is opened to specified users;
   receive a query request to the current state sent by a second terminal;
   determine whether a user of the second terminal belongs to the specified users; and
   if the user of the second terminal belongs to the specified users, send the current state to the second terminal.

The advantages and features of the devices according to the embodiments of the present disclosure are the same with those of the above described methods and will not be repeated here.

In a particular embodiment, the steps of the method for making a call applied in a first terminal, the steps of the method for making a call applied in a second terminal, or the steps of the method for making a call applied in a server are determined by computer program instructions.

Consequently, according to a tenth aspect, the invention is also directed to a computer program for executing, when this program is executed by a computer, the steps of the method for making a call applied in a first terminal, or the steps of the method for making a call applied in a second terminal, or the steps of the method for making a call applied in a server.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by the embodiments of the present disclosure may include the following advantageous effects:
In the related arts, a person who is making a call (hereinafter referred to as a calling party) usually does not know that the other party (hereinafter referred to as a called party) is driving, and therefore the call is made and inevitably results in a distraction to the called party. However, in embodiments of the present disclosure, a terminal device (such as a mobile phone) of the called party may detect that the called party is driving, then inform a cloud server to update a state of the called party, as an example, the state of the called party may be stored in the server in a form of a cloud card. In this way, when the caller makes a call, a mobile phone of the caller may query the state of the called party from the server firstly. Thus, if the mobile phone finds that the called party is currently driving, the mobile phone of the caller generates a prompt to the caller to inform the caller of the current state of the called party, thus enabling the caller to promptly decide to cancel the call and to avoid distracting the called party who is driving, and thereby ensuring the safety of the called party.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention, and together with the description, serve to explain the principles of the invention.
Fig. 1 is a flow chart illustrating a method for making a call, according to an exemplary embodiment.
Fig. 2 is a flow chart illustrating a method for making a call, according to an exemplary embodiment.
Fig. 3 is a scenario diagram illustrated according to an exemplary embodiment.
Fig. 4 is a scenario diagram illustrated according to an exemplary embodiment.
Fig. 5 is a flow chart illustrating a method for making a call, according to an exemplary embodiment.
Fig. 6 is a flow chart illustrating a method for making a call, according to an exemplary embodiment.
Fig. 7 is a flow chart illustrating a method for making a call, according to an exemplary embodiment.
Fig. 8 is a signaling diagram illustrating a method for making a call, according to an exemplary embodiment.
Fig. 9 is an interface diagram illustrated according to an exemplary embodiment.
Fig. 10 is a block diagram illustrating a device for making a call, according to an exemplary embodiment.
Fig. 11 is a block diagram illustrating a device for making a call, according to an exemplary embodiment.
Fig. 12 is a block diagram illustrating a device for making a call, according to an exemplary embodiment.
Fig. 13 is a block diagram illustrating a device for making a call, according to an exemplary embodiment.
Fig. 14 is a block diagram illustrating a device for making a call, according to an exemplary embodiment.
Fig. 15 is a block diagram illustrating a device for making a call, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with some aspects related to the invention as recited in the appended claims.

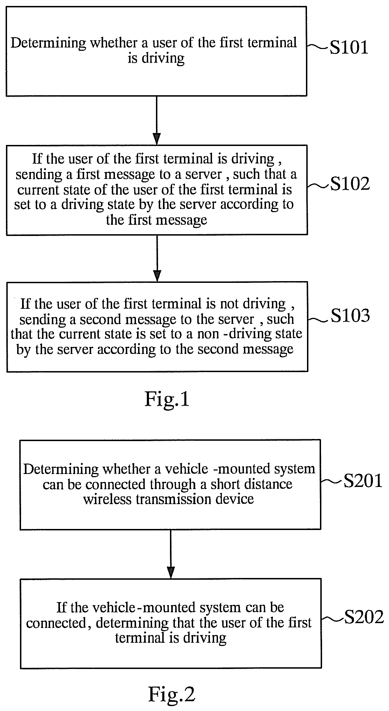

Fig. 1 is a flow chart illustrating a method for making a call, according to an exemplary embodiment. The method may be applied in a first terminal, such as a mobile phone, a tablet computer, etc. The first terminal is a called terminal, and a user of the first terminal is a called party or a listener.

Referring to Fig. 1, the method may include the following steps.

In step S101, whether a user of the first terminal is driving is determined.

In the specific implementation, the first terminal may determine whether the user of the first terminal is currently driving in many ways known in the art, and the present embodiment is not limited to these ways. For example, the first terminal may determine whether the user is driving by judging whether a position of the first terminal and a position of a car of the user are overlapped, and the like. These ways may be used here without departing from the protection scope of the present disclosure.

In step 102, if it is determined that the user of the first terminal is driving, a first message is sent to a server instructing the server to set a current state of the user of the first terminal to a driving state.

The server may store the current state of the user of the first terminal, for other users to query. In this way, when calling the user of the first terminal, terminals of the other users may first query the current state of the user of the first terminal, and if the current state is the driving state, a prompt may be provided to the other users for example indicating that it is not good timing to make a call.

As an example, in the specific implementation, the current state of the user of the first terminal may be realized in a form of a cloud card. The cloud card is an electronic card stored in a cloud server by the user. Since a cloud sharing function can be realized, the electronic card is referred to as "the cloud card".

Furthermore, in order to protect the privacy, the current state of the user of the first terminal user is usually only accessible to one or more specified (i.e. predetermined) users for query, for example, the specified users may be friends in a chat software of the user of the first terminal, or contacts in an address book of the first terminal, and the like.

In step S103, if it is determined that the user of the first terminal is not driving, a second message is sent to the server instructing the server to set the current state to a non-driving state.

Taking the previous example, when the terminals of the other users query again the current state of the user of the first terminal, if it is found that the current state of the user is a non-driving state, a prompt may also be provided to the other users for example indicating that the user of the first terminal is suitable to be called.

Referring to Fig. 2, in the present embodiment or some other embodiments of the present disclosure, the determining whether the user of the first terminal is driving may include the following steps.

In step S201, whether the first terminal detects an available or connectable vehicle-mounted system through a short distance wireless transmission device is determined.

For example, the short distance wireless transmission device may be a Bluetooth module which is able to enable short distance communication within several meters.

In step S202, if the first terminal detects a connectable vehicle-mounted system through the short distance wireless transmission device, the user of the first terminal is driving is determined. In other words, the determination that the user is driving may made from the fact that the first terminal is in the proximity of the vehicle-mounted system.

Taking a Bluetooth module as an example of the short distance wireless transmission device, if the Bluetooth module in the mobile phone can be connected to the vehicle-mounted system, it means that the user is in the car, and it may be further inferred that the user is driving. Of course, the present embodiment will not discuss the special case that the user is only a passenger in the car rather than a driver and the like.

As an example, the short distance wireless transmission device may be installed in the first terminal, or may be installed in a wearable device connected to the first terminal.

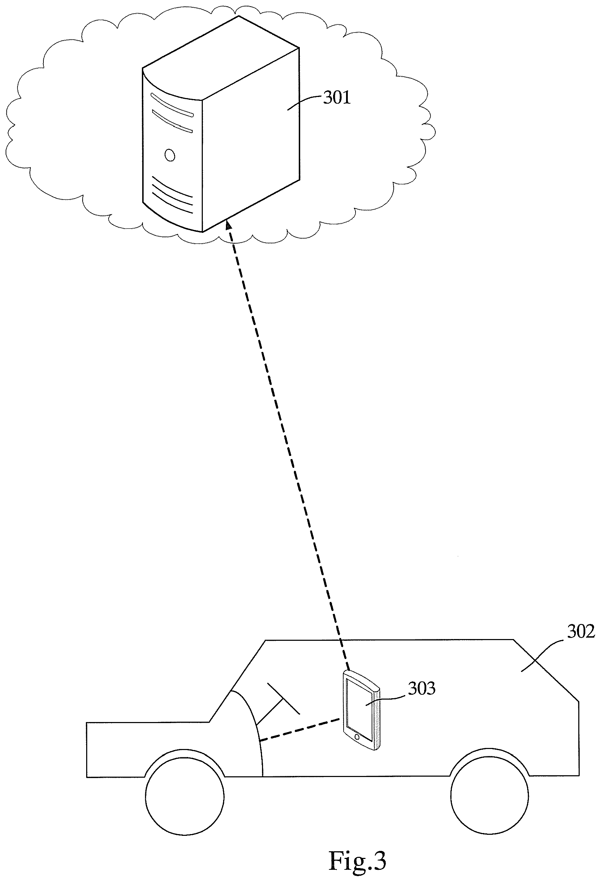

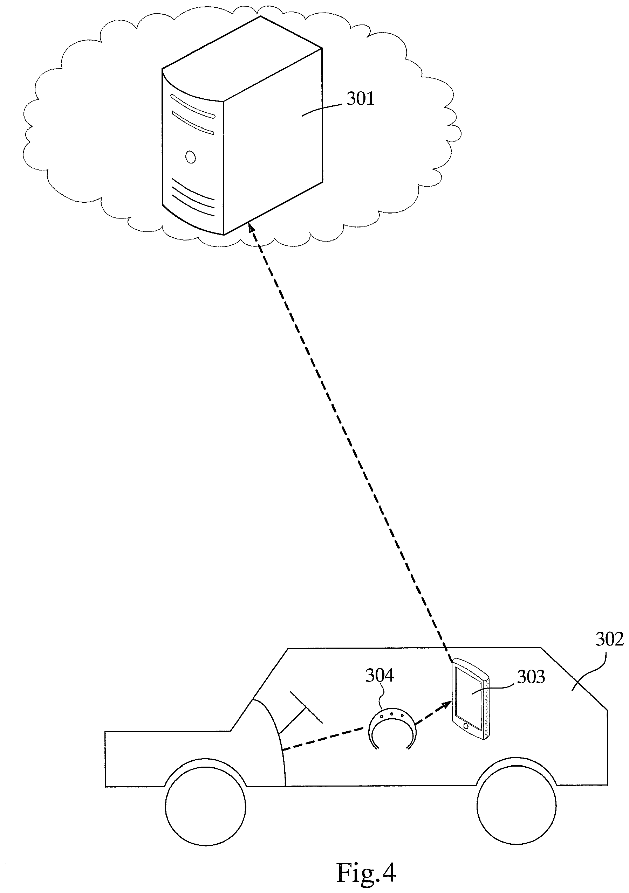

Referring to Fig. 3 and Fig. 4, taking that the first terminal is a mobile phone and the wearable device is a bracelet as an example. In Fig. 3, a mobile phone 303 finds that it can connect to a vehicle-mounted system of a car 302 via Bluetooth, then a message is sent to a server 301, to inform the server that the user is currently driving. In Fig. 4, a bracelet 304 finds that it can connect to the vehicle-mounted system of the car 302 via Bluetooth, then it is reported to the mobile phone 303, then the message is sent to the server 302 by the mobile phone 303, to inform the server that the user is currently driving.

In the related arts, the caller usually does not know that the listener is driving, and thereby the telephone interference to the listener is unavoidable. However, in the above embodiments, the terminal device of the listener may know that the listener is driving, then inform the cloud server to update the state of the listener. In this way, when the caller makes a call, a mobile phone of the caller may query the state of the listener from the server firstly, and if the listener is currently driving, the mobile phone of the caller sends a reminder to the caller, and thus the interference to the listener is avoided, and thereby the safety of the listener in driving is ensured.

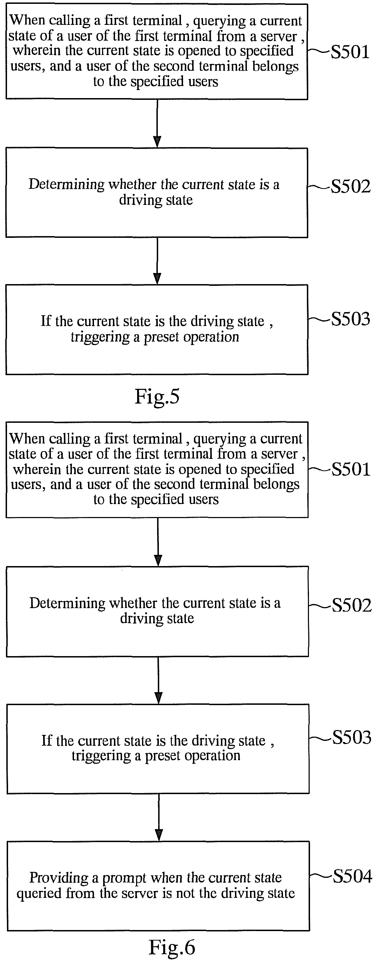

Fig. 5 is a flow chart illustrating a method for making a call, according to an exemplary embodiment. The method may be applied in a second terminal, such as a mobile phone, a tablet computer, etc. The second terminal is a calling terminal, and a user of the second terminal is a calling user or a caller.

Referring to Fig. 5, the method may include the following steps.

In step S501, when calling a first terminal, the second terminal queries a current state of a user of the first terminal from a server, wherein the current state is accessible to at least one predetermined user, and wherein a user of the second terminal being one of the at least one predetermined user.

The server may store the current state of the user of the first terminal, for other users to query. In this way, when calling to the user of the first terminal, terminals of the other users may query the current state of the user of the first terminal firstly, and if the current state is the driving state, a prompt may be provided to the calling party for example indicating that it is not good timing to make a call.

As an example, in the specific implementation, the current state of the user of the first terminal may be realized in a form of a cloud card. The cloud card is an electronic card stored in a cloud server by the user. Since a cloud sharing function can be realized, the electronic card is referred to as "the cloud card".

Furthermore, in order to protect the privacy, the current state of the user of the first terminal user is usually only accessible to one or more specified users, for example, the specified users may be friends in a chat software of the user of the first terminal, or contacts in an address book of the first terminal, and the like.

In step S502, whether the current state is a driving state is determined based on a result of the querying.

In step S503, if the current state is determined to be the driving state, a preset operation is triggered. For example, triggering the sending of a prompt to the second terminal indicating that the user of the first terminal is not suitable to be called.

In the present embodiment or some other embodiments of the present disclosure, the preset operation may include:
generating a prompt indicating that the user of the first terminal is driving.

Furthermore, the preset operation may include: cancelling the present call, or sending a short message to the first terminal, and the like. The present embodiment is not limited thereto.

Referring to Fig. 6, in the present embodiment or some other embodiments of the present disclosure, after triggering the preset operation, the method may further include the following step.

In step S504, the second terminal queries again a current state of the user of the first terminal from the server, and a prompt is generated when the current state queried from the server is a non-driving state. This prompt indicates for example that the user of the first terminal is no longer driving and thus suitable to receive a phone call.

In this way, after seeing the prompt, the caller or calling party (the second terminal) may be aware that it is now appropriate to make a call to the callee or called party(first terminal).

In the above embodiments, the terminal of the called party (the first terminal) may detect that the called party is driving, then inform the cloud server to update the state of the called party. In this way, when the calling party makes a call to the called party, a mobile phone (the second terminal) of the calling party may query the state of the called party from the server firstly, and if the called party is currently driving, the mobile phone of the calling party generates a prompt to inform the calling party of the current state of the called party, thus enabling the calling party to promptly decide to cancel the call and to avoid distracting the called party who is driving, and thereby ensuring the safety of the called party.

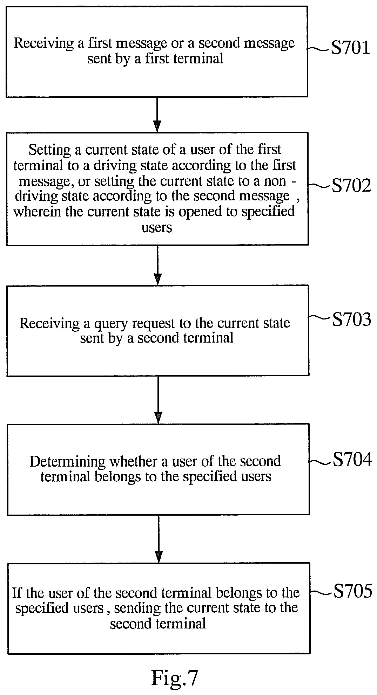

Fig. 7 is a flow chart illustrating a method for making a call, according to an exemplary embodiment. The method may be applied in a server. Referring to Fig. 7, the method may include the following steps.

In step S701, a message is received from a first terminal, the message instructing the server to set a current state of a user of the first terminal to a driving state or a non-driving state.

In step S702, the current state of the user of the first terminal is set to a driving state or a non-driving state according to the received message, wherein the current state is accessible to at least one predetermined user.

The server may store the current state of the user of the first terminal, for other users to query. In this way, when calling to the user of the first terminal, terminals of the other users may query the current state of the user of the first terminal firstly, and if the current state is the driving state, a prompt may be provided.

As an example, in the specific implementation, the current state of the user of the first terminal may be realized in a form of a cloud card. The cloud card is an electronic card stored in a cloud server by the user. Since a cloud sharing function can be realized, the electronic card is referred to as "the cloud card".

Furthermore, in order to protect the privacy, the current state of the user of the first terminal user is usually only opened to specified users, for example, the specified users may be friends in a chat software of the user of the first terminal, or contacts in an address book of the first terminal, and the like.

In step S703, a request querying the current state of the user of the first terminal from a second terminal is received.

In step S704, whether a user of the second terminal is one of the at least one predetermined user is determined.

In step S705, if the user of the second terminal is one of the at least one predetermined user, the current state of the user of the first terminal is sent to the second terminal.

In the above embodiments, the terminal of the called party (the first terminal) may detect that the called party is driving, then inform the cloud server to update the state of the called party. In this way, when the calling party makes a call to the called party, a mobile phone (the second terminal) of the caller may query the state of the called party from the server firstly, and if the called party is currently driving, the mobile phone of the caller generates a prompt to the caller, and thus enabling the calling party to promptly decide to cancel the call and to avoid distracting the called party who is driving, and thereby ensuring the safety of the called party.

Hereinafter, the aspects of the present disclosure will be further described by combining a specific scenario.

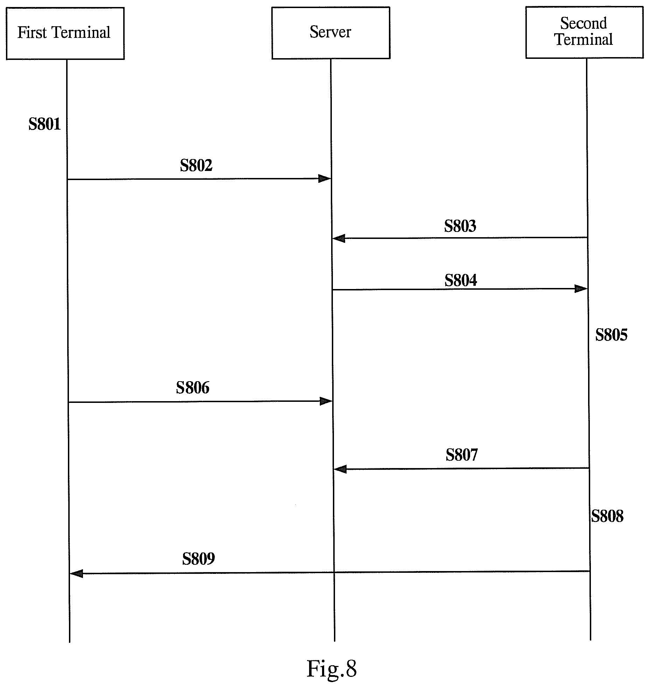

Fig. 8 is a signaling diagram illustrating a method for making a call, according to an exemplary embodiment.

In step S801, a first terminal finds that it detects a vehicle-mounted system via Bluetooth, then it infers that a user of the first terminal is driving.

In step S802, the first terminal sends a first message to a server, such that a cloud card of the user of the first terminal is set to a driving state by the server.

In step S803, before making a call to the user of the first terminal, a second terminal queries the cloud card of the user of the first terminal from the server firstly.

In step S804, the server sends the cloud card of the user of the first terminal to the second terminal.

In step S805, the second terminal finds that the user of the first terminal is driving, then provides a notification to a user of the second terminal.

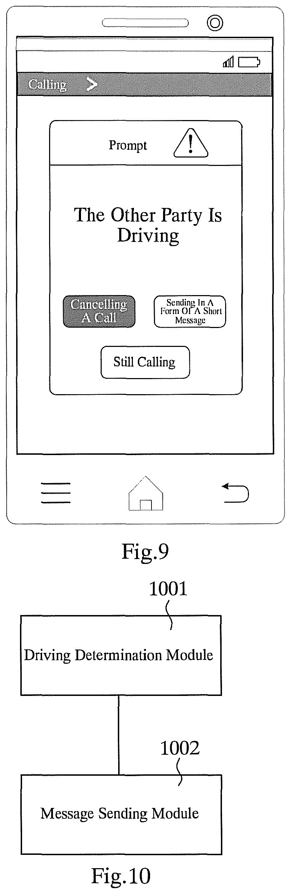

Furthermore, in addition to the notification, several options may be provided for the user of the second terminal to select, as an example shown in Fig. 9. In Fig. 9, after seeing the notification, the user may make a choice among "cancelling a call", "sending in a form of a short message" and "still calling".

In step S806, the first terminal finds that a Bluetooth connection with the vehicle-mounted system is disconnected, then it infers that the user of the first terminal is not driving.

In step S807, the first terminal sends a second message to the server, such that the cloud card of the user of the first terminal is set to a non-driving state.

In step S808, the second terminal queries the cloud card of the user of the first terminal again, finds that the user of the first terminal is not driving, then informs it to the user of the second terminal.

In step S809, the user of the second terminal makes the call to the user of the first terminal again, and finally the call is realized.

In the above embodiments, the terminal device of the listener may know that the listener is driving, then inform the cloud server to update the state of the listener. In this way, when the caller makes a call, a mobile phone of the caller may query the state of the listener from the server firstly, and if the listener is currently driving, the mobile phone of the caller sends a reminder to the caller, and thus the interference to the listener is avoided, and thereby the safety of the listener in driving is ensured.

Embodiments of devices of the present disclosure are described hereinafter, which may be used for performing embodiments of methods of the present disclosure. For the details not described in the embodiments of devices of the present disclosure, please refer to the embodiments of methods of the present disclosure.

Fig. 10 is a block diagram illustrating a device for making a call, according to an exemplary embodiment. The device may be applied in a first terminal. Referring to Fig. 10, the device may include:
a driving determination module 1001 configured to determine whether a user of the first terminal is driving, and if the user of the first terminal is driving, a message sending module 1002 is triggered; and
the message sending module 1002 configured to send a first message to a server, such that a current state of the user of the first terminal is set to a driving state by the server according to the first message, and if the user of the first terminal is not driving, send a second message to the server, such that the current state is set to a non-driving state by the server according to the second message, wherein the current state is opened to specified users.

In the present embodiment or some other embodiments of the present disclosure, the driving determination module 1001 is configured to: determine whether a vehicle-mounted system can be connected through a short distance wireless transmission device; and if the vehicle-mounted system can be connected, determine that the user of the first terminal is driving.

In the present embodiment or some other embodiments of the present disclosure, the short distance wireless transmission device is installed in the first terminal, or is installed in a wearable device connected to the first terminal.

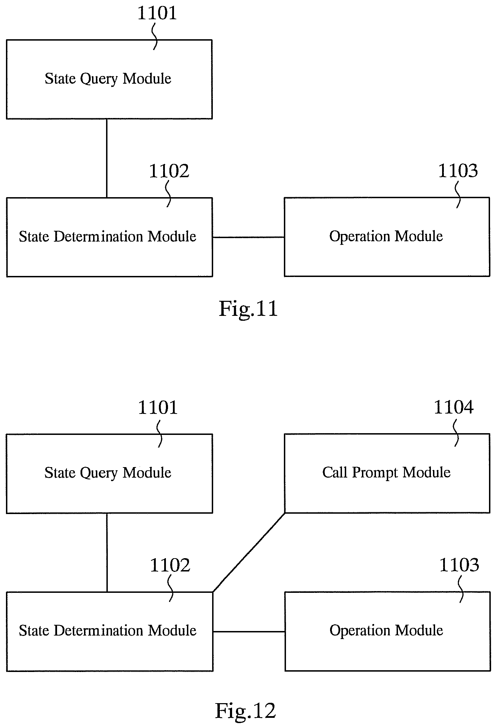

Fig. 11 is a block diagram illustrating a device for making a call, according to an exemplary embodiment. The device may be applied in a second terminal. Referring to Fig. 11, the device may include:
a state query module 1101 configured to, when calling a first terminal, query a current state of a user of the first terminal from a server, wherein the current state is opened to specified users, and a user of the second terminal belongs to the specified users;
a state determination module 1102 configured to determine whether the current state is a driving state, and if the current state is the driving state, an operation module 1103 is triggered; and
the operation module 1103 configured to perform a preset operation.

In the present embodiment or some other embodiments of the present disclosure, the preset operation includes:
sending a reminder that the user of the first terminal is driving.

Referring to Fig. 12, in the present embodiment or some other embodiments of the present disclosure, the device may further include:
a call prompt module 1104 configured to provide a prompt when the current state queried from the server is not the driving state.

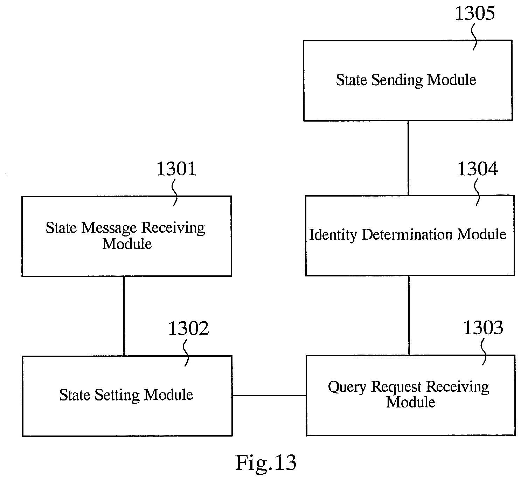

Fig. 13 is a block diagram illustrating a device for making a call, according to an exemplary embodiment. The device may be applied in a server. Referring to Fig. 13, the device may include:
a state message receiving module 1301 configured to receive a first message or a second message sent by a first terminal;
a state setting module 1302 configured to set a current state of a user of the first terminal to a driving state according to the first message, or set the current state to a non-driving state according to the second message, wherein the current state is opened to specified users;
a query request receiving module 1303 configured to receive a query request to the current state sent by a second terminal;
an identity determination module 1304 configured to determine whether a user of the second terminal belongs to the specified users, and if the user of the second terminal belongs to the specified users, a state sending module is triggered; and
the state sending module 1305 configured to send the current state to the second terminal.

In the above embodiments, the terminal device of the listener may know that the listener is driving, then inform the cloud server to update the state of the listener. In this way, when the caller makes a call, a mobile phone of the caller may query the state of the listener from the server firstly, and if the listener is currently driving, the mobile phone of the caller sends a reminder to the caller, and thus the interference to the listener is avoided, and thereby the safety of the listener in driving is ensured.

With respect to the devices in the above embodiments, the specific manners for performing operations for individual modules therein and technical effects have been described in detail in the embodiments regarding the methods, which will not be elaborated herein.

The present disclosure further discloses a device for making a call, including:
a processor; and
a memory for storing instructions executable by the processor;
wherein the processor is configured to:
   determine whether a user of the first terminal is driving;
   if the user of the first terminal is driving, send a first message to a server, such that a current state of the user of the first terminal is set to a driving state by the server according to the first message; and
   if the user of the first terminal is not driving, send a second message to the server, such that the current state is set to a non-driving state by the server according to the second message.

The present disclosure further discloses a non-transitory computer-readable storage medium having stored therein instructions that, when executed by the processor of the first terminal, causes the first terminal to perform the method for making a call, the method including:
determining whether a user of the first terminal is driving;
if the user of the first terminal is driving, sending a first message to a server, such that a current state of the user of the first terminal is set to a driving state by the server according to the first message; and
if the user of the first terminal is not driving, sending a second message to the server, such that the current state is set to a non-driving state by the server according to the second message.

The present disclosure further discloses a device for making a call, including:
a processor; and
a memory for storing instructions executable by the processor;
wherein the processor is configured to:
   when calling a first terminal, query a current state of a user of the first terminal from a server, wherein the current state is opened to specified users, and a user of the second terminal belongs to the specified users;
   determine whether the current state is a driving state; and
   if the current state is the driving state, trigger a preset operation.

The present disclosure further discloses a non-transitory computer-readable storage medium having stored therein instructions that, when executed by the processor of the second terminal, causes the second terminal to perform the method for making a call, the method including:
when calling a first terminal, querying a current state of a user of the first terminal from a server, wherein the current state is opened to specified users, and a user of the second terminal belongs to the specified users;
determining whether the current state is a driving state; and
if the current state is the driving state, triggering a preset operation.

The present disclosure further discloses a device for making a call, including:
a processor; and
a memory for storing instructions executable by the processor;
wherein the processor is configured to:
   receive a first message or a second message sent by a first terminal;
   set a current state of a user of the first terminal to a driving state according to the first message, or set the current state to a non-driving state according to the second message, wherein the current state is opened to specified users;
   receive a query request to the current state sent by a second terminal;
   determine whether a user of the second terminal belongs to the specified users; and
   if the user of the second terminal belongs to the specified users, send the current state to the second terminal.

The present disclosure further discloses a non-transitory computer-readable storage medium having stored therein instructions that, when executed by the processor of the server, causes the server to perform the method for making a call, the method including:
receiving a first message or a second message sent by a first terminal;
setting a current state of a user of the first terminal to a driving state according to the first message, or setting the current state to a non-driving state according to the second message, wherein the current state is opened to specified users;
receiving a query request to the current state sent by a second terminal;
determining whether a user of the second terminal belongs to the specified users; and
if the user of the second terminal belongs to the specified users, sending the current state to the second terminal.

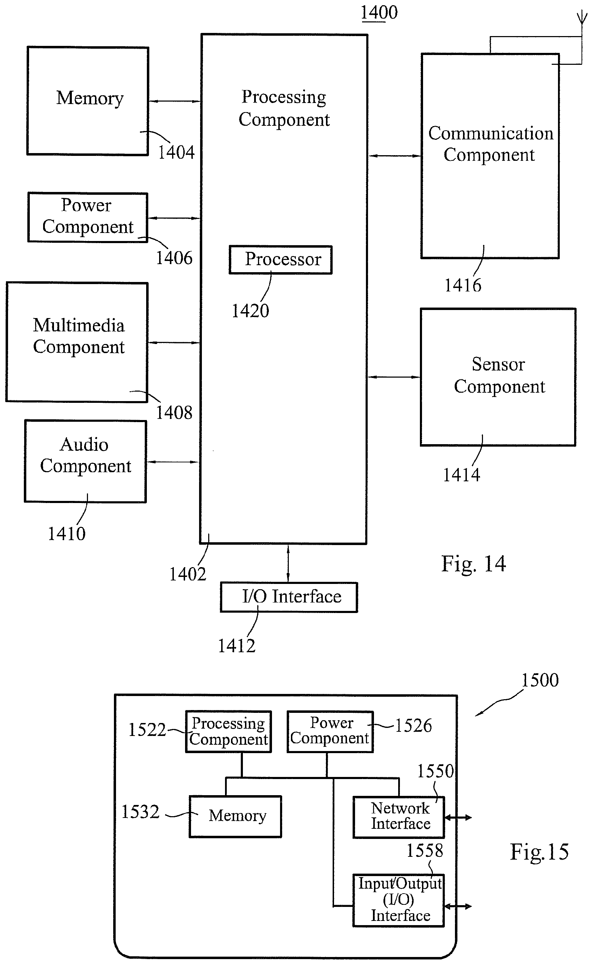

Fig. 14 is a block diagram illustrating a device for making a call, according to an exemplary embodiment. For example, the device 1400 may be a mobile phone, a computer, a digital broadcast terminal, a messaging device, a gaming console, a tablet, a medical device, exercise equipment, a personal digital assistant, and the like.

Referring to Fig. 14, the device 1400 may include one or more of the following components: a processing component 1402, a memory 1404, a power component 1406, a multimedia component 1408, an audio component 1410, an input/output (I/O) interface 1412, a sensor component 1414, and a communication component 1416.

The processing component 1402 typically controls overall operations of the device 1400, such as the operations associated with display, telephone calls, data communications, camera operations, and recording operations. The processing component 1402 may include one or more processors 1420 to execute instructions to perform all or part of the steps in the above described methods. Moreover, the processing component 1402 may include one or more modules which facilitate the interaction between the processing component 1402 and other components. For instance, the processing component 1402 may include a multimedia module to facilitate the interaction between the multimedia component 1408 and the processing component 1402.

The memory 1404 is configured to store various types of data to support the operation of the device 1400. Examples of such data include instructions for any applications or methods operated on the device 1400, contact data, phonebook data, messages, pictures, video, etc. The memory 1404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1406 provides power to various components of the device 1400. The power component 1406 may include a power management system, one or more power sources, and any other components associated with the generation, management, and distribution of power in the device 1400.

The multimedia component 1408 includes a screen providing an output interface between the device 1400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1408 includes a front camera and/or a rear camera. The front camera and the rear camera may receive an external multimedia datum while the device 1400 is in an operation mode, such as a photographing mode or a video mode. Each of the front camera and the rear camera may be a fixed optical lens system or have focus and optical zoom capability.

The audio component 1410 is configured to output and/or input audio signals. For example, the audio component 1410 includes a microphone ("MIC") configured to receive an external audio signal when the device 1400 is in an operation mode, such as a call mode, a recording mode, and a voice recognition mode. The received audio signal may be further stored in the memory 1404 or transmitted via the communication component 1416. In some embodiments, the audio component 1410 further includes a speaker to output audio signals.

The I/O interface 1412 provides an interface between the processing component 1402 and peripheral interface modules, such as a keyboard, a click wheel, buttons, and the like. The buttons may include, but are not limited to, a home button, a volume button, a starting button, and a locking button.

The sensor component 1414 includes one or more sensors to provide status assessments of various aspects of the device 1400. For instance, the sensor component 1414 may detect an open/closed status of the device 1400, relative positioning of components, e.g., the display and the keypad, of the device 1400, a change in position of the device 1400 or a component of the device 1400, a presence or absence of user contact with the device 1400, an orientation or an acceleration/deceleration of the device 1400, and a change in temperature of the device 1400. The sensor component 1414 may include a proximity sensor configured to detect the presence of nearby objects without any physical contact. The sensor component 1414 may also include a light sensor, such as a CMOS or CCD image sensor, for use in imaging applications. In some embodiments, the sensor component 1414 may also include an accelerometer sensor, a gyroscope sensor, a magnetic sensor, a pressure sensor, or a temperature sensor.

The communication component 1416 is configured to facilitate communication, wired or wirelessly, between the device 1400 and other devices. The device 1400 can access a wireless network based on a communication standard, such as WiFi, 2G, or 3G, or a combination thereof. In one exemplary embodiment, the communication component 1416 receives a broadcast signal or broadcast associated information from an external broadcast management system via a broadcast channel. In one exemplary embodiment, the communication component 1416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1404, executable by the processor 1420 in the device 1400, for performing the above-described methods. For example, the non-transitory computer-readable storage medium may be a ROM, a RAM, a CD-ROM, a magnetic tape, a floppy disc, an optical data storage device, and the like.

Fig. 15 is a block diagram illustrating a device for making a call, according to an exemplary embodiment. For example, the device 1500 may be provided as a server.

Referring to Fig. 15, the device 1500 includes a processing component 1522 that further includes one or more processors, and memory resources represented by a memory 1532 for storing instructions executable by the processing component 1522, such as application programs. The application programs stored in the memory 1532 may include one or more modules each corresponding to a set of instructions. Further, the processing component 1522 is configured to execute the instructions to perform the solutions for locating a wearable device at the server side.

The device 1500 may also include a power component 1526 configured to perform power management of the device 1500, wired or wireless network interface(s) 1550 configured to connect the device 1500 to a network, and an input/output (I/O) interface 1558. The device 1500 may operate based on an operating system stored in the memory 1532, such as Windows ServerTM, Mac OS XTM, UnixTM, LinuxTM, FreeBSDTM, or the like.

## Claims

1. A method for making a call, applied in a first terminal and comprising:
determining (S101) whether a user of the first terminal is driving;
if it is determined that the user of the first terminal is driving, sending (S102) a first message to a server instructing the server to set a cloud card of the user of the first terminal to a driving state, said cloud card being an electronic card stored in the server by said user and only accessible to at least one predetermined further user who is a friend in a chat software of the user of the first terminal or a contact in an address book of the first terminal; and
if it is determined that the user of the first terminal is not driving, sending (S103) a second message to the server instructing the server to set said cloud card to a non-driving state;
wherein the cloud card is set to be queried by a terminal of the at least one predetermined user when making a call to the first terminal.

2. The method according to claim 1, wherein the determining (S101) whether the user of the first terminal is driving comprises:
detecting (S201) through a short distance wireless transmission device whether a vehicle-mounted system exists, the short distance wireless transmission device being installed in the first terminal, or being installed in a wearable device connected to the first terminal; and
if it is detected that a vehicle-mounted system exists, determining (S202) that the user of the first terminal is driving.

3. A method for making a call, applied in a second terminal and comprising:
when calling a first terminal, querying (S501) a cloud card of a user of the first terminal from a server, said cloud card being an electronic card stored in the server by said user and only accessible to at least one predetermined further user who is a friend in a chat software of the user of the first terminal or a contact in an address book of the first terminal;
determining (S502) whether said cloud card is a driving state based on a result of the querying; and
if it is determined that the cloud card is the driving state, triggering (S503) a preset operation;
wherein a user of the second terminal is one of the at least one predetermined user.

4. The method according to claim 3, wherein the preset operation comprises:
generating a prompt indicating that the user of the first terminal is driving; and
after triggering (S503) the preset operation, the method further comprises:
querying the cloud card of the user of the first terminal from the server and generating (S504) a prompt if the cloud card queried from the server is a non-driving state.

5. A method for making a call, applied in a server and comprising:
receiving (S701) from a first terminal a message instructing the server to set a cloud card of a user of the first terminal to a driving state or a non-driving state, said cloud card being an electronic card stored in the server by said user and only accessible to at least one predetermined further user who is a friend in a chat software of the user of the first terminal or a contact in an address book of the first terminal;
setting (S702) the cloud card of the user of the first terminal to the driving state or the non-driving state according to the received message;
receiving (S703) a request querying said cloud card from a second terminal;
determining (S704) whether a user of the second terminal is at least one predetermined user who is a friend in a chat software of the user of the first terminal or a contact in an address book of the first terminal; and
if it is determined that the user of the second terminal is one of the at least one predetermined user, sending (S705) a current state of the cloud card to the second terminal.

6. A device for making a call, applied in a first terminal and comprising:
a driving determination module (1001) configured to determine whether a user of the first terminal is driving;
a message sending module (1002) configured to be triggered if it is determined that the user of the first terminal is driving, to send a first message to a server instructing the server to set a cloud card of the user of the first terminal to a driving state, said cloud card being an electronic card stored in the server by said user and only accessible to at least one predetermined further user who is a friend in a chat software of the user of the first terminal or a contact in an address book of the first terminal, and configured to be triggered if it is determined that the user of the first terminal is not driving, to send a second message to the server instructing the server to set said cloud card to a non-driving state,
said cloud card is set to be queried by a terminal of the at least one predetermined user when making a call to the first terminal,
wherein the driving determination module (1001) is further configured to: detect through a short distance wireless transmission device, whether a vehicle-mounted system exists; if it is detected that the vehicle-mounted system exists, determine that the user of the first terminal is driving.

7. The device according to claim 6, wherein the short distance wireless transmission device is installed in the first terminal, or is installed in a wearable device connected to the first terminal.

8. A device for making a call, applied in a second terminal and comprising:
a state query module (1101) configured to, when calling a first terminal, query a cloud card of a user of the first terminal from a server, said cloud card being an electronic card stored in the server by said user and only accessible to at least one predetermined further user who is a friend in a chat software of the user of the first terminal or a contact in an address book of the first terminal;
a state determination module (1102) configured to determine whether said cloud card is a driving state based on a result of the querying; and
an operation module (1103) configured to be triggered if it is determined that the cloud card is the driving state, to perform a preset operation,
wherein the preset operation comprises generating a prompt indicating that the user of the first terminal is driving;
wherein a user of the second terminal is one of the at least one predetermined further user.

9. The device according to claim 8, further comprising:
a call prompt module (1104) configured to generate a prompt if the cloud card queried from the server is a non-driving state.

10. A device for making a call, applied in a server and comprising:
a state message receiving module (1301) configured to receive from a first terminal a message instructing the server to set a cloud card of a user of the first terminal to a driving state or a non-driving state, said cloud card being an electronic card stored in the server by said user and only accessible to at least one predetermined further user who is a friend in a chat software of the user of the first terminal or a contact in an address book of the first terminal;
a state setting module (1302) configured to set the cloud card of the user of the first terminal to the driving state or the non-driving state according to the received message;
a query request receiving module (1303) configured to receive a request querying said cloud card from a second terminal;
an identity determination module (1304) configured to determine whether a user of the second terminal is at least one predetermined further
user who is a friend in a chat software of the user of the first terminal or a contact in an address book of the first terminal; and
a state sending module (1305) configured to be triggered if it is determined that the user of the second terminal is one of the at least one predetermined further user, to send a current state of the cloud card to the second terminal.

11. A computer program including instructions for executing the steps of a method according to any one of claims 1 to 2 when said program is executed by a first terminal.

12. A computer program including instructions for executing the steps of a method according to any one of claims 3 to 4 when said program is executed by a second terminal.

13. A computer program including instructions for executing the steps of a method according to claim 5 when said program is executed by a server.

14. A recording medium readable by a computer and having recorded thereon the computer program according to claim 11 or the computer program according to claim 12 or the computer program according to claim 13.

## Patentansprüche

1. Verfahren zum Tätigen eines Anrufs, das in einem ersten Endgerät angewendet wird und umfasst:
Feststellen (S101), ob ein Benutzer des ersten Terminals fährt (S101),
wenn festgestellt wird, dass der Benutzer des ersten Terminals fährt, Senden (S102) einer ersten Nachricht an einen Server, die den Server anweist, eine Cloudkarte des Benutzers des ersten Terminals in einen Fahrzustand zu versetzen, wobei die Cloudkarte eine elektronische Karte ist, die von dem Benutzer in dem Server gespeichert wurde und nur für mindestens einen vorbestimmten weiteren Benutzer zugänglich ist, der ein Freund in einer Chat-Software des Benutzers des ersten Terminals oder ein Kontakt in einem Adressbuch des ersten Terminals ist, und
wenn festgestellt wird, dass der Benutzer des ersten Terminals nicht fährt, Senden (S103) einer zweiten Nachricht an den Server, die den Server anweist, die Cloudkarte in einen Nicht-Fahrzustand zu versetzen,
wobei die Cloudkarte so eingestellt ist, dass sie von einem Terminal des mindestens einen vorbestimmten Benutzers abgefragt wird, wenn er das erste Terminal anruft.

2. Verfahren nach Anspruch 1, wobei das Feststellen (S101), ob der Benutzer des ersten Terminals fährt, umfasst:
Erkennen (S201) mittels eines drahtlosen Übertragungsgeräts für kurze Entfernungen, ob ein fahrzeugmontiertes System existiert, wobei das drahtlose Übertragungsgerät für kurze Entfernungen in dem ersten Endgerät installiert ist oder in einer tragbaren Vorrichtung installiert ist, die mit dem ersten Endgerät verbunden ist; und
wenn festgestellt wird, dass ein fahrzeugmontiertes System vorhanden ist, Feststellen (S202), dass der Benutzer des ersten Terminals fährt.

3. Verfahren zum Tätigen eines Anrufs, das in einem zweiten Endgerät angewendet wird und umfasst:
beim Anrufen eines ersten Terminals, Abfragen (S501) einer Cloudkarte eines Benutzers eines ersten Terminals von einem Server, wobei die Cloudkarte eine elektronische Karte ist, die von dem Benutzer in dem Server gespeichert wurde und nur für mindestens einen vorbestimmten weiteren Benutzer zugänglich ist, der ein Freund in einer Chat-Software des Benutzers des ersten Terminals oder ein Kontakt in einem Adressbuch des ersten Terminals ist,
Feststellen (S502), ob die genannte Cloud-Card in einem Fahrzustand ist, basierend auf einem Ergebnis der Abfrage, und
wenn festgestellt wird, dass die Cloudkarte in einem Fahrzustand ist, Auslösen (S503) einer voreingestellte Operation,
wobei ein Benutzer des zweiten Terminals einer der mindestens einen vorbestimmten Benutzer ist.

4. Verfahren nach Anspruch 3, wobei die voreingestellte Operation umfasst:
Erzeugen einer Eingabeaufforderung, die anzeigt, dass der Benutzer des ersten Terminals fährt, und
nach dem Auslösen (S503) der voreingestellten Operation umfasst das Verfahren ferner:
Abfragen der Cloudkarte des Benutzers des ersten Terminals vom Server und Erzeugen (S504) einer Eingabeaufforderung, wenn die vom Server abgefragte Cloudkarte in einem Nicht-Fahrzustand ist.

5. Verfahren zum Tätigen eines Anrufs, das in einem Server angewendet wird und folgendes umfasst:
Empfangen (S701) einer Nachricht von einem ersten Terminal, die den Server anweist, eine Cloudkarte eines Benutzers des ersten Terminals in einen Fahrzustand oder einen Nicht-Fahrzustand zu versetzen, wobei die Cloudkarte eine elektronische Karte ist, die von dem Benutzer in dem Server gespeichert wurde und nur für mindestens einen vorbestimmten weiteren Benutzer zugänglich ist, der ein Freund in einer Chat-Software des Benutzers des ersten Terminals oder ein Kontakt in einem Adressbuch des ersten Terminals ist,
Versetzen (S702) der Cloudkarte des Benutzers des ersten Terminals in den Fahrzustand oder den Nicht-Fahrzustand entsprechend der empfangenen Nachricht;
Empfangen (S703) einer Anfrage, die die besagte Cloudkarte abfragt, von einem von einem zweiten Terminal,
Bestimmen (S704), ob ein Benutzer des zweiten Terminals mindestens ein vorbestimmter Benutzer ist, der ein Freund in einer Chat-Software des Benutzers des ersten Terminals oder ein Kontakt in einem Adressbuch des ersten Terminals ist, und
wenn festgestellt wird, dass der Benutzer des zweiten Terminals einer der mindestens einen vorbestimmten Benutzer ist, Senden (S705) eines aktuellen Status der Cloud Card an das zweite Terminal.

6. Vorrichtung zum Tätigen eines Anrufs, die in einem ersten Endgerät angewendet wird und umfasst:
ein Fahrfeststellungsmodul (1001), das dazu konfiguriert ist, festzustellen, ob ein Benutzer des ersten Terminals fährt,
ein Nachrichtensendemodul (1002), das dazu konfiguriert ist, ausgelöst zu werden, wenn festgestellt wird, dass der Benutzer des ersten Terminals fährt, um eine erste Nachricht an einen Server zu senden, die den Server anweist, eine Cloudkarte des Benutzers des ersten Terminals in einen Fahrzustand zu versetzen, , wobei die Cloudkarte eine elektronische Karte ist, die von dem Benutzer in dem Server gespeichert wurde und nur für mindestens einen vorbestimmten weiteren Benutzer zugänglich ist, der ein Freund in einer Chat-Software des Benutzers des ersten Terminals oder ein Kontakt in einem Adressbuch des ersten Terminals ist, und das ferner dazu konfiguriert ist, ausgelöst zu werden, wenn festgestellt wird, dass der Benutzer des ersten Terminals nicht fährt, um eine zweite Nachricht an den Server zu senden, die den Server anweist, die Cloudkarte in einen Nicht-Fahrzustand zu versetzen,
wobei die genannte Cloudkarte eingestellt ist, von einem Terminal des mindestens einen vorher festgelegten Benutzers abgefragt zu werden, wenn ein Anruf an das erste Terminal getätigt wird,
wobei das Fahrfeststellungsmodul (1001) ferner dazu konfiguriert ist, dass es über eine drahtlose Kurzstrecken-Übertragungsvorrichtung erkennt, ob ein fahrzeugmontiertes System existiert und, wenn erkannt wird, dass das fahrzeugmontierte System existiert, festzustellen, dass der Benutzer des ersten Endgeräts fährt.

7. Vorrichtung nach Anspruch 6, wobei das drahtlose Kurzstrecken-Übertragungsgerät im ersten Endgerät installiert ist oder in einer tragbaren Vorrichtung installiert ist, die mit dem ersten Endgerät verbunden ist.

8. Vorrichtung zum Tätigen eines Anrufs, die in einem zweiten Endgerät angewendet wird und umfasst:
ein Zustandsabfragemodul (1101), das dazu konfiguriert ist, wenn ein erstes Terminal angerufen wird, eine Cloudkarte eines Benutzers des ersten Terminals von einem Server abzufragen, wobei die Cloudkarte eine elektronische Karte ist, die von dem Benutzer in dem Server gespeichert wurde und nur für mindestens einen vorbestimmten weiteren Benutzer zugänglich ist, der ein Freund in einer Chat-Software des Benutzers des ersten Terminals oder ein Kontakt in einem Adressbuch des ersten Terminals ist,
ein Zustandsfeststellungsmodul (1102), das dazu konfiguriert ist, auf der Grundlage eines Ergebnisses der Abfrage zu bestimmen, ob die Cloudkarte in einem Fahrzustand ist, und
ein Operationsmodul (1103), das dazu konfiguriert ist, ausgelöst zu werden, wenn festgestellt wird, dass die Cloudkarte in dem Fahrzustand ist, um eine voreingestellte Operation durchzuführen,
wobei die voreingestellte Operation das Erzeugen einer Eingabeaufforderung umfasst, die anzeigt, dass der Benutzer des ersten Terminals fährt,
wobei ein Benutzer des zweiten Terminals einer der mindestens einen vorbestimmten weiteren Benutzer ist.

9. Vorrichtung nach Anspruch 8, ferner umfassend:
ein Anrufeingabeaufforderungsmodul (1104), das dazu konfiguriert ist, eine Eingabeaufforderung zu erzeugen, wenn die vom Server abgefragte Cloudkarte in einem Nicht-Fahrzustand ist.

10. Vorrichtung zum Tätigen eines Anrufs, die in einem Server angewendet wird und umfasst:
ein Zustandsnachrichten-Empfangsmodul (1301), das dazu konfiguriert ist, von einem ersten Terminal eine Nachricht zu empfangen, die den Server anweist, eine Cloudkarte eines Benutzers des ersten Terminals in einen Fahrzustand oder einen Nicht-Fahrzustand zu versetzen, wobei die Cloudkarte eine elektronische Karte ist, die von dem Benutzer in dem Server gespeichert wurde und nur für mindestens einen vorbestimmten weiteren Benutzer zugänglich ist, der ein Freund in einer Chat-Software des Benutzers des ersten Terminals oder ein Kontakt in einem Adressbuch des ersten Terminals ist,
ein Zustandseinstellungsmodul (1302), das dazu konfiguriert ist, die Cloudkarte des Benutzers des ersten Terminals je nach der empfangenen Nachricht in den Fahrzustand oder den Nicht-Fahrzustand zu versetzen,
ein Abfrageanfrage-Empfangsmodul (1303), das dazu konfiguriert ist, eine die Cloudkarte abfragende Anfrage von einem zweiten Terminal zu empfangen,
ein Identitätsbestimmungsmodul (1304), das dazu konfiguriert ist, zu bestimmen, ob ein Benutzer des zweiten Terminals mindestens ein vorbestimmter weiterer Benutzer ist, der ein Freund in einer Chat-Software des Benutzers des ersten Terminals oder ein Kontakt in einem Adressbuch des ersten Terminals ist, und
ein Zustandssendemodul (1305), das dazu konfiguriert ist, ausgelöst zu werden, wenn festgestellt wird, dass der Benutzer des zweiten Terminals einer der mindestens einen vorbestimmten weiteren Benutzer ist, um einen aktuellen Zustand der Cloudkarte an das zweite Terminal zu senden.

11. Computerprogramm, das Befehle zur Ausführung der Schritte eines Verfahrens nach einem der Ansprüche 1 bis 2 umfasst, wenn das Programm von einem ersten Terminal ausgeführt wird.

12. Computerprogramm, das Befehle zur Ausführung der Schritte eines Verfahrens nach einem der Ansprüche 3 bis 4 umfasst, wenn das Programm von einem zweiten Terminal ausgeführt wird.

13. Computerprogramm, das Befehle zur Ausführung der Schritte eines Verfahrens nach Anspruch 5 umfasst, wenn das Programm von einem Server ausgeführt wird.

14. Aufzeichnungsmedium, das von einem Computer gelesen werden kann und auf dem das Computerprogramm nach Anspruch 11 oder das Computerprogramm nach Anspruch 12 oder das Computerprogramm nach Anspruch 13 aufgezeichnet ist.

## Revendications

1. Procédé d'émission d'un appel, appliqué dans un premier terminal et comprenant les étapes ci-dessous consistant à :
déterminer (S101) si un utilisateur du premier terminal est en train de conduire ;
s'il est déterminé que l'utilisateur du premier terminal est en train de conduire, envoyer (S102) un premier message à un serveur, donnant instruction au serveur de définir une carte infonuagique de l'utilisateur du premier terminal sur un état de conduite, ladite carte infonuagique étant une carte électronique stockée dans le serveur par ledit utilisateur et accessible uniquement à au moins un utilisateur supplémentaire prédéterminé qui correspond à un ami, dans un logiciel de clavardage, de l'utilisateur du premier terminal, ou un contact dans un carnet d'adresses du premier terminal ; et
s'il est déterminé que l'utilisateur du premier terminal n'est pas en train de conduire, envoyer (S103) un second message au serveur, donnant instruction au serveur de définir ladite carte infonuagique dans un état d'absence de conduite ;
dans lequel la carte infonuagique est configurée de manière à être interrogée par un terminal dudit au moins un utilisateur prédéterminé lors de l'émission d'un appel au premier terminal.

2. Procédé selon la revendication 1, dans lequel l'étape consistant à déterminer (S101) si l'utilisateur du premier terminal est en train de conduire ou non comprend les étapes ci-dessous consistant à :
détecter (S201), par l'intermédiaire d'un dispositif de transmission sans fil à courte distance, s'il existe un système monté sur un véhicule, le dispositif de transmission sans fil à courte distance étant installé dans le premier terminal, ou étant installé dans un dispositif portatif connecté au premier terminal ; et
s'il est détecté qu'un système monté sur un véhicule existe, déterminer (S202) que l'utilisateur du premier terminal est en train de conduire.

3. Procédé d'émission d'un appel, appliqué dans un second terminal, et comprenant les étapes ci-dessous consistant à :
lors de l'appel d'un premier terminal, interroger (S501) une carte infonuagique d'un utilisateur du premier terminal à partir d'un serveur, ladite carte infonuagique étant une carte électronique stockée dans le serveur par ledit utilisateur, et accessible uniquement à au moins un utilisateur supplémentaire prédéterminé qui correspond à un ami, dans un logiciel de clavardage, de l'utilisateur du premier terminal, ou à un contact dans un carnet d'adresses du premier terminal ;
déterminer (S502) si ladite carte infonuagique correspond à un état de conduite sur la base d'un résultat de l'interrogation ; et
s'il est déterminé que la carte infonuagique correspond à l'état de conduite, déclencher (S503) une opération prédéfinie ;
dans lequel un utilisateur du second terminal correspond à l'un dudit au moins un utilisateur prédéterminé.

4. Procédé selon la revendication 3, dans lequel l'opération prédéfinie comprend l'étape ci-dessous consistant à :
générer une invite indiquant que l'utilisateur du premier terminal est en train de conduire ; et
après avoir déclenché (S503) l'opération prédéfinie, le procédé comprend en outre les étapes ci-dessous consistant à :
interroger la carte infonuagique de l'utilisateur du premier terminal à partir du serveur, et générer (S504) une invite si la carte infonuagique interrogée à partir du serveur correspond à un état d'absence de conduite.

5. Procédé d'émission d'un appel, appliqué dans un serveur, et comprenant les étapes ci-dessous consistant à :
recevoir (S701), en provenance d'un premier terminal, un message donnant instruction au serveur de définir une carte infonuagique d'un utilisateur du premier terminal sur un état de conduite ou sur un état d'absence de conduite, ladite carte infonuagique étant une carte électronique stockée dans le serveur par ledit utilisateur et accessible uniquement à au moins un utilisateur supplémentaire prédéterminé qui correspond à un ami, dans un logiciel de clavardage, de l'utilisateur du premier terminal, ou à un contact dans un carnet d'adresses du premier terminal ;
définir (S702) la carte infonuagique de l'utilisateur du premier terminal sur l'état de conduite ou sur l'état d'absence de conduite, selon le message reçu ;
recevoir (S703) une demande interrogeant ladite carte infonuagique en provenance d'un second terminal ;
déterminer (S704) si un utilisateur du second terminal correspond à au moins un utilisateur prédéterminé qui correspond à un ami, dans un logiciel de clavardage, de l'utilisateur du premier terminal, ou à un contact dans un carnet d'adresses du premier terminal ; et
s'il est déterminé que l'utilisateur du second terminal correspond à l'un dudit au moins un utilisateur prédéterminé, envoyer (S705) un état en cours de la carte infonuagique au second terminal.

6. Dispositif permettant l'émission d'un appel, appliqué dans un premier terminal, et comprenant :
un module de détermination de conduite (1001) configuré de manière à déterminer si un utilisateur du premier terminal est en train de conduire ;
un module d'envoi de message (1002) configuré de manière à être déclenché s'il est déterminé que l'utilisateur du premier terminal est en train de conduire, en vue d'envoyer un premier message à un serveur, donnant instruction au serveur de définir une carte infonuagique de l'utilisateur du premier terminal sur un état de conduite, ladite carte infonuagique étant une carte électronique stockée dans le serveur par ledit utilisateur et accessible uniquement à au moins un utilisateur supplémentaire prédéterminé qui correspond à un ami, dans un logiciel de clavardage, de l'utilisateur du premier terminal, ou à un contact dans un carnet d'adresses du premier terminal, et configuré de manière à être déclenché s'il est déterminé que l'utilisateur du premier terminal n'est pas en train de conduire, en vue d'envoyer un second message au serveur, donnant instruction au serveur de définir ladite carte infonuagique sur un état d'absence de conduite ;
dans lequel ladite carte infonuagique est configurée de manière à être interrogée par un terminal dudit au moins un utilisateur prédéterminé lors de l'émission d'un appel au premier terminal ;
dans lequel le module de détermination de conduite (1001) est en outre configuré de manière à :
détecter, par l'intermédiaire d'un dispositif de transmission sans fil à courte distance, si un système monté sur un véhicule existe ; et
s'il est détecté que le système monté sur un véhicule existe, déterminer que l'utilisateur du premier terminal est en train de conduire.

7. Dispositif selon la revendication 6, dans lequel le dispositif de transmission sans fil à courte distance est installé dans le premier terminal, ou est installé dans un dispositif portatif connecté au premier terminal.

8. Dispositif permettant l'émission d'un appel, appliqué dans un second terminal, et comprenant :
un module d'interrogation d'état (1101) configuré de manière à, lors de l'émission d'un appel à un premier terminal, interroger une carte infonuagique d'un utilisateur du premier terminal à partir d'un serveur, ladite carte infonuagique étant une carte électronique stockée dans le serveur par ledit utilisateur et accessible uniquement à au moins un utilisateur supplémentaire prédéterminé qui correspond à un ami, dans un logiciel de clavardage, de l'utilisateur du premier terminal, ou à un contact dans un carnet d'adresses du premier terminal ;
un module de détermination d'état (1102) configuré de manière à déterminer si ladite carte infonuagique correspond à un état de conduite sur la base d'un résultat de l'interrogation ; et
un module d'opération (1103) configuré de manière à être déclenché s'il est déterminé que la carte infonuagique correspond à l'état de conduite, en vue de mettre en œuvre une opération prédéfinie ;
dans lequel l'opération prédéfinie comprend la génération d'une invite indiquant que l'utilisateur du premier terminal est en train de conduire ;
dans lequel un utilisateur du second terminal correspond à l'un dudit au moins un utilisateur supplémentaire prédéterminé.

9. Dispositif selon la revendication 8, comprenant en outre :
un module d'invite d'appel (1104) configuré de manière à générer une invite si la carte infonuagique interrogée à partir du serveur correspond à un état d'absence de conduite.

10. Dispositif permettant l'émission d'un appel, appliqué dans un serveur, et comprenant :
un module de réception de message d'état (1301) configuré de manière à recevoir, en provenance d'un premier terminal, un message donnant instruction au serveur de définir une carte infonuagique d'un utilisateur du premier terminal sur un état de conduite ou sur un état d'absence de conduite, ladite carte infonuagique étant une carte électronique stockée dans le serveur par ledit utilisateur, et accessible uniquement à au moins un utilisateur supplémentaire prédéterminé qui correspond à un ami, dans un logiciel de clavardage, de l'utilisateur du premier terminal, ou à un contact dans un carnet d'adresses du premier terminal ;
un module de définition d'état (1302) configuré de manière à définir la carte infonuagique de l'utilisateur du premier terminal sur l'état de conduite ou sur l'état d'absence de conduite, selon le message reçu ;
un module de réception de demande d'interrogation (1303) configuré de manière à recevoir une demande interrogeant ladite carte infonuagique, à partir d'un second terminal ;
un module de détermination d'identité (1304) configuré de manière à déterminer si un utilisateur du second terminal correspond à au moins un utilisateur supplémentaire prédéterminé qui correspond à un ami, dans un logiciel de clavardage, de l'utilisateur du premier terminal, ou à un contact dans un carnet d'adresses du premier terminal ; et
un module d'envoi d'état (1305) configuré de manière à être déclenché s'il est déterminé que l'utilisateur du second terminal correspond à l'un dudit au moins un utilisateur supplémentaire prédéterminé, en vue d'envoyer un état en cours de la carte infonuagique au second terminal.

11. Programme informatique incluant des instructions pour exécuter les étapes d'un procédé selon l'une quelconque des revendications 1 à 2, lorsque ledit programme est exécuté par un premier terminal.

12. Programme informatique incluant des instructions pour exécuter les étapes d'un procédé selon l'une quelconque des revendications 3 à 4, lorsque ledit programme est exécuté par un second terminal.

13. Programme informatique incluant des instructions pour exécuter les étapes d'un procédé selon la revendication 5, lorsque ledit programme est exécuté par un serveur.

14. Support d'enregistrement lisible par un ordinateur et sur lequel est enregistré le programme informatique selon la revendication 11, ou le programme informatique selon la revendication 12, ou le programme informatique selon la revendication 13.
